(19) Europäisches Patentamt
European Patent Office
Office européen des brevets

(11) Publication number: 0 205 290 B1

(12) # EUROPEAN PATENT SPECIFICATION

(45) Date of publication of the patent specification: 13.09.89

(51) Int. Cl.4: C09B 69/10, D06P 1/00

(21) Application number: 86304135.6

(22) Date of filing: 30.05.86

(54) **Coloured polymers.**

(30) Priority: 12.06.85 GB 8514906

(43) Date of publication of application: 17.12.86 Bulletin 86/51

(45) Publication of the grant of the patent: 13.09.89 Bulletin 89/37

(84) Designated Contracting States: BE CH DE FR GB IT LI

(56) References cited:
BE-A- 662 351
BE-A- 698 813
FR-A- 1 468 540

**The file contains technical information submitted after the application was filed and not included in this specification**

(73) Proprietor: IMPERIAL CHEMICAL INDUSTRIES PLC, Imperial Chemical House Millbank, London SW1P 3JF(GB)

(72) Inventor: Parton, Brian, 11 Cleadon Drive South, Bury Lancashire(GB)

(74) Representative: Stephenson, Kenneth et al, Imperial Chemical Industries PLC Legal Department: Patents PO Box 6 Bessemer Road, Welwyn Garden City Herts, AL7 1HD(GB)

EP 0 205 290 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to coloured polymers, to a method for their production and to their use for the coloration of various substrates.

Dyes containing vinyl, acryloyl and other polymerisable olefinic groups are already known and methods have been proposed for their homopolymerisation and for their copolymerisation with other polymerisable monomers both in the presence and absence of textile or other substrates.

Thus, United Kingdom Patent Specification No. 877 402 describes the production of coloured polymers, useful as pigments, by copolymerising azo or anthraquinone dyes containing polymerisable olefinic groups with other unsaturated polymerisable compounds.

United Kingdom Patent Specification No. 914 354 describes a process for the simultaneous dyeing and finishing of textiles by applying a coloured polymer which has been obtained by the emulsion copolymerisation of a dye containing a polymerisable olefinic group and an uncoloured polymerisable compound, the applied copolymer then being cross-linked.

United Kingdom Patent Specification No. 1 036 700 describes organic pigments obtained by the homopolymerisation of 1-methacryloylaminoanthraquinone, 1-p-vinylbenzoylaminoanthraquinone and certain derivatives thereof.

French Patent No. 1 468 540 describes print pastes for printing smooth materials, the pastes containing a binder and a film-forming copolymer of (a) at least one dye which bears a polymerisable group, (b) at least one ester of a polymerisable carboxylic acid, and (c) at least one polymerisable hydrocarbon. The dyes having a polymerisable group described in the two Examples are both derived from carbocyclic diazotisable amines and carbocyclic coupling components. Elsewhere in the patent specification, dyes having pyrazolone coupling components are illustrated, the diazo components being 3-acryloylaminoaniline and 4-aminostyrene.

Belgian Patent No. 698 813 describes the preparation of coloured polymers by coupling a diazotisable amine with a polymer obtained by copolymerising a polymerisable coupling component and a copolymerisable monomer. Thus, for example, a polymer obtained by the copolymerisation of 1-(m-acrylamidophenyl)-3-methyl-5-pyrazolone and acrylic acid is coupled with diazotised 4-chloro-3-nitroaniline.

Other patents, for example United Kingdom Patents 1 046 751 and 1 218 547, have described the application of polymerisable dyes containing olefinic groups to textile materials in conjunction with a free radical polymerisation initiator with the object of polymerising the dye on or within the textile fibres.

Other references to the synthesis, properties and uses of polymeric dyes may be found in a review article by Marechal (Progress in Organic Coatings, 10 (1982) 251–287).

None of the processes described in the above documents appears to have achieved commercial importance, presumably because they did not provide colorations having the intensities and fastness properties that could be obtained more economically by other methods.

It has been found that coloured polymers useful in a wide variety of coloration processes can be obtained by polymerising appropriately substituted azo dyes containing polymerisable groups.

Accordingly, the invention provides coloured polymers obtained by the copolymerisation of at least one uncoloured polymerisable olefin and at least one azo dye which is free from water-solubilising groups and contains at least one polymerisable olefinically unsaturated group and has the formula:

$$A{-}N{=}N{-}E \quad (1)$$

wherein A represents the residue of a carbocyclic or heterocyclic diazotisable amine containing at least one electron-withdrawing substituent and E represents the residue of a carbocyclic coupling component or a heterocyclic coupling component of the aminopyrazole, 2,6-diaminopyridine, 2,6-dihydroxypyridine or aminopyrimidine series, at least one of A and E being heterocyclic, the or each polymerisable group being attached to a carbon atom forming part of residue A or E.

The polymerisable olefinically unsaturated groups present in the dyes are groups which render the dyes homopolymerisable or copolymerisable with other olefinic (vinyl) monomers under standard polymerisation conditions. As examples of such groups, there may be mentioned groups of the general formula:

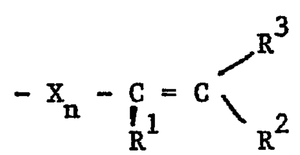

(2)

wherein X represents an atom or group linking the olefinic group to a carbon atom present in residue A or residue E, n has the value of 0 or 1 and each of $R^1$, $R^2$ and $R^3$ independently represents a hydrogen or halogen atom or a hydroxyl, optionally substituted alkyl, optionally substituted alkoxy, optionally substituted alkylthio, cycloalkyl, optionally substituted aryl, optionally substituted aryloxy, optionally substituted arylthio, nitro, cyano, acyloxy or alkoxycarbonyl group.

Alkyl groups mentioned herein, either as such or as components of larger groups such as alkoxycarbonyl, particularly include lower alkyl groups having one to four carbon atoms.

The preferred polymerisable groups are those in which each of $R^2$ and $R^3$ is hydrogen and $R^1$ is hydrogen, halogen, lower alkyl, cyano or alkoxycarbonyl. Especially preferred groups are those in which each of $R^2$ and $R^3$ is hydrogen and $R^1$ is hydrogen, halogen (especially chlorine) or lower alkyl (especially methyl).

As examples of linkages which may be represented by X in the formula:

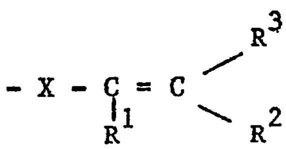

(3)

there may be mentioned –O–, –S–, –CO–, –CS–, $-NR^4-CO-$ in which $R^4$ is hydrogen or alkyl, –O–CO–, –S–CO–, –CO–O–, –CO–S–, –SO–, $-SO_2-$, $-NR^4-SO_2-$, $-SO_2-NR^4-$, $-CH_2-$, $-O-CH_2-$, $-S-CH_2-$, $-SO_2-CH_2-$, $-COCH_2-$, $-O-CO-CH_2-$, $-NR^4-CH_2-$ and $-NR^4-$.

As examples of especially preferred polymerisable groups there may be mentioned groups of the formula:

$-O-CO-CR^5=CH_2$ (4)

in which $R^5$ represents hydrogen or lower alkyl, especially methyl.

It is preferred that the dyes of formula (1) contain two polymerisable groups, although dyes containing only one such group and dyes containing a higher number of polymerisable groups, for example five, may be used.

The requirement that the azo dyes upon which the coloured polymers are base are free from water-solubilising groups means that they do not contain the sulphonate, carboxylate, quaternary ammonium or other ionic groups which provide dyes with substantial water-solubility.

As examples of carbocyclic radicals which may be represented by A, there may be mentioned naphthyl and, especially, phenyl radicals. Heterocyclic radicals which may be represented by A include
2-thienyl,
3- or 4-pyrazolyl,
2- or 5-imidazolyl,
3-(1,2,4-triazolyl),
5-(1,2,3,4-tetrazolyl),
2-(1,3,4-thiadiazolyl),
3- or 5-(1,2,4-thiadiazolyl),
4- or 5-(1,2,3-thiadiazolyl),
3-, 4- or 5-isothiazolyl,
3-pyridyl,
2-benzoxazolyl,
3-thienyl-[2,3-b]-pyridine,
3-isothiazolyl-[3,4-d]-pyrimidine,
3-isothiazolyl-[3,4-b]-pyridine,
3-isothiazolyl-[3,4-b]-thiophene,
2-thiazolyl,
2-benzthiazolyl,
indazol-3-yl,
pyrazolopyridin-3-yl, and benz-2,1-isothiazol-3-yl radicals.

As examples of electron-withdrawing (electron-attracting) substituents which may be present on A, there may be mentioned chloro, bromo, fluoro, nitro, cyano, thiocyanato, trifluoromethyl, alkylcarbonyl (e.g. acetyl), alkylsulphonyl (e.g. methylsulphonyl), alkoxycarbonyl (e.g. methoxycarbonyl, ethoxycarbonyl), arylcarbonyl (e.g. benzoyl), arylsulphonyl (e.g. phenylsulphonyl), carbamoyl, alkylcarbamoyl (e.g. methylcarbamoyl), dialkylcarbamoyl (e.g. diethylcarbamoyl), arylcarbamoyl, diarylcarbamoyl, sulphamoyl, alkylsulphamoyl (e.g. ethylsulphamoyl), dialkylsulphamoyl (e.g. dimethylsulphamoyl), arylsulphamoyl, diarylsulphamoyl and arylazo.

In addition to carrying one or more electron-withdrawing substituent, the residue represented by A may carry one or more non-ionic substituents which are not electron-withdrawing in character. Examples of such substituents include hydroxy, alkyl (e.g. methyl, butyl), alkoxy (e.g. methoxy) and acylamino (e.g. acetylamino) radicals.

The residue of the coupling component represented by E may be the residue of any of the carbocyclic coupling components, that is to say carbocyclic compounds which couple with diazo compounds to form azo dyes. Examples of such coupling components include members of the phenol, naphthol or arylamine

series. E may also represent the residue of a coupling component of the aminopyrazole, 2,6-diaminopyridine, 2,6-dihydroxypyridine or aminopyrimidine series. Any of the non-ionic substituents appropriate to coupling components may be present.

One class of azo dyes from which the coloured polymers of the invention may be derived may be represented by the formula:

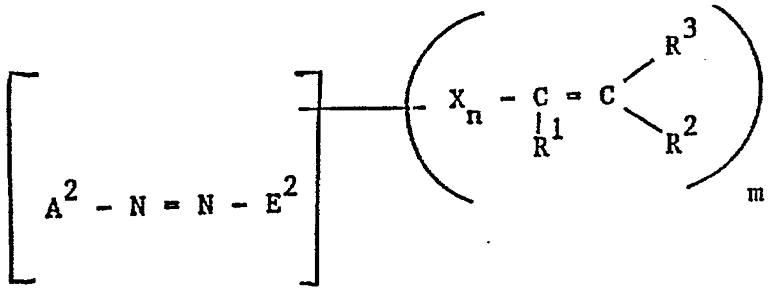

(5)

wherein $A^2$ represents the residue of a carbocyclic diazotisable amine containing at least one electron-withdrawing substituent and optionally one or more non-ionic substituent not electron-withdrawing in character;
$E^2$ represents the residue of a heterocyclic coupling component of the aminopyrazole, 2,6-diaminopyridine, 2,6-dihydroxypyridine or m is an integer of at least 1, and aminopyrimidine series;
$R^1$, $R^2$, $R^3$, X and n have the meanings given above, the dyes being free from water-solubilising groups.

A second class of azo dyes from which the coloured polymers of the invention may be derived may be represented by the formula:

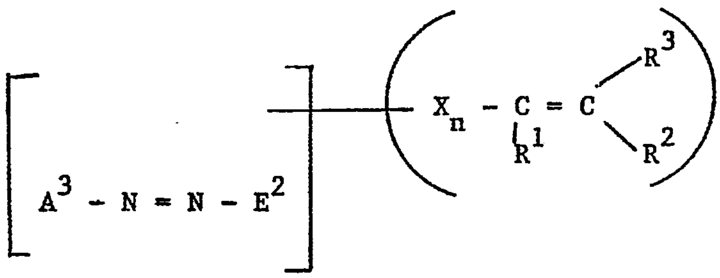

(6)

wherein $A^3$ represents the residue of a heterocyclic diazotisable amine containing at least one electron-withdrawing substituent and optionally one or more non-ionic substituent not electron-withdrawing in character; and
$E^2$, $R^1$, $R^2$, $R^3$, X, n and m have the meanings given above, the dyes being free from water-solubilising groups.

A third class of azo dyes from which the coloured polymers of the invention may be derived may be represented by the formula:

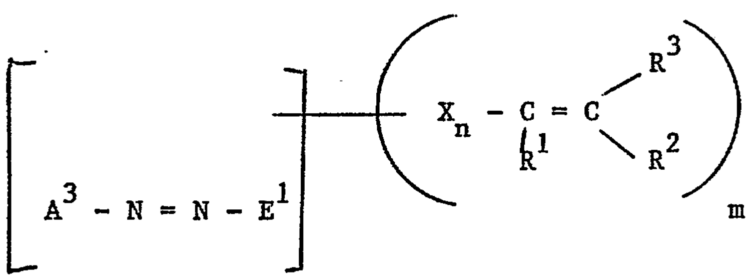

(7)

wherein $E_1$ represents the residue of a carbocyclic coupling component; and $A^3$, $R^1$, $R^2$, $R^3$, X, n and m have the meanings given above the dyes being free from water-solubilising groups.

Preferred dyes include the dyes of formula (5) and those dyes of formula (7) in which the electron-withdrawing substituent carried by $A^3$ is other than nitro.

The polymers may be prepared by copolymerising at least one azo dye of formula (1) which is free from water-solubilising groups and contains at least one polymerisable olefinically unsaturated group and at

least one uncoloured polymerisable olefin. The polymerisation may be carried out using any of the appropriate conventional methods. Thus, bulk, solution, emulsion or suspension techniques may be used with the usual polymerisation initiators and, where necessary, emulsifiers and/or protective colloids. To obtain the polymers in solid particulate form, it is convenient to carry out the polymerisation in an organic solvent using a suitably soluble initiator such as azodiisobutyronitrile and isolate the polymer by precipitation and filtration. Polymers can be obtained in a convenient stable dispersion (latex) form using emulsion polymerisation techniques and, for example, a persulphate as initiator.

The copolymers suitably containing at least 0.5% and preferably from 2 to 10% on a weight basis of units derived from the azo dye.

Examples of uncoloured polymerisable olefins which may be used in preparing the coloured polymers of the invention include vinyl aromatic compounds, for example, styrene, alpha-methylstyrene and vinyl toluene, alpha-beta-unsaturated carboxylic acids, for example acrylic and methacrylic acids and the nitriles, amides and esters thereof, for example, acrylonitrile, methyl methacrylate, butyl methacrylate, glycidyl methacrylate, acrylamide and N-methylolacrylamide, vinyl esters, for example vinyl acetate, vinyl chloride, vinylidene chloride, vinyl carbazole and vinyl ketones. Methacrylic acid esters such as methyl methacrylate are preferred.

Azo dyes of formula (1) which are free from water-solubilising groups and contain at least one polymerisable olefinically unsaturated group are known in the art and may be prepared by introducing one or more polymerisable groups into an azo dye or into one or more of the intermediates therefor, for example the diazotisable amine and/or the coupling component. In one method of introduction, a dye or intermediate containing an appropriate functional group is reacted with a compound containing a ploymerisable olefinic group and a functional group which is reactive towards the aforementioned functional group. Any azo dyes of formula (1) which are free from water-solubilising groups and contain at least one polymerisable olefinic group and which have not been specifically described in the prior art may be obtained by the conventional techniques employed in azo dye chemistry. These will present no difficulty to the skilled person and involve the usual substitution, diazotisation and coupling reactions and standard isolation techniques.

The coloured polymers are particularly useful in the form of latices containing from 20 to 50% by weight of the polymer. An especially useful latex contains from 20 to 50% by weight of a copolymer containing from 2 to 10% by weight of units derived from a dye of formula (1) having at least two methacryloyl groups and from 98 to 90% by weight of units derived from a mixture of co-monomers consisting of methyl methacrylate and an N-methylolacrylamide derivative which latter comprises from 0.1 to 5%, preferably from 0.5 to 2.0%, by weight of the co-monomer mixture. The dye preferably contains two methacryloyloxy groups and the N-methylolacrylamide derivative is preferably N-methylolacrylamide itself.

The coloured polymers of the invention are useful in a wide variety of coloration processes for colouring textile materials, plastics materials, paper, paints and lacquers, the polymers being used, for example, in the form of latices, fine powder dispersions, liquid solutions or powders. The polymers are particularly valuable for colouring cellulosic textile materials, for example cotton, aromatic polyester fibres, for example polyethylene terephthalate and cotton/polyester blends. When so used, the polymers exhibit brighter shades and higher light fastness than the coloured polymers described in the prior art. For textile printing processes, the polymers of the invention can be obtained in the form of emulsions which are superior in stability to dispersions of the pigments commonly used in textile printing. Furthermore, the copolymer systems are superior to pigment systems in tinctorial value, in fastness to rubbing, to solvents and in transparency where necessary.

The invention is illustrated but not limited by the following Examples in which all parts are by weight.

Example 1

1.0 part of 4,6-bis-(beta-acryloyloxyethylamino)-2-ethyl-5-(4-nitrophenylazo)pyrimidine is dissolved in 50 parts of methyl methacrylate then added with rapid stirring to a solution of 1.2 parts of the sodium salt of lauryl ether sulphonic acid and 0.4 parts of an ethoxylated $C_{13}$–$C_{15}$ aliphatic alcohol in 20 parts of water to give a coarse emulsion. This coarse emulsion is treated with 4.6 parts of 4% aqueous potassium persulphate then added portionwise over 15 minutes to a solution of 3.5 parts of 4% aqueous potassium persulphate and 0.3 parts of the sodium salt of lauryl ether sulphonate in 33 parts of water at 88–90°C. After stirring at 88–90° for a further 10 minutes the mixture is cooled to room temperature, screened then applied to polyester and cotton using conventional printing and continuous dyeing techniques to yield a golden yellow shade of excellent fastness to light, heat and wet treatments. When applied to cotton in the presence of a butyl acrylate based polymeric binder system excellent fastness to wet and dry rubbing is also obtained.

The following table gives further Examples of products obtained in a similar way to the product of Example 1. Column 2 indicates the dyestuff monomer used, Column 3 the colourless co-monomer and Column 4 the colour of the final print.

| Example | Dyestuff Monomer | Colourless Co-Monomer | Shade on Cotton |
|---|---|---|---|
| 2 | 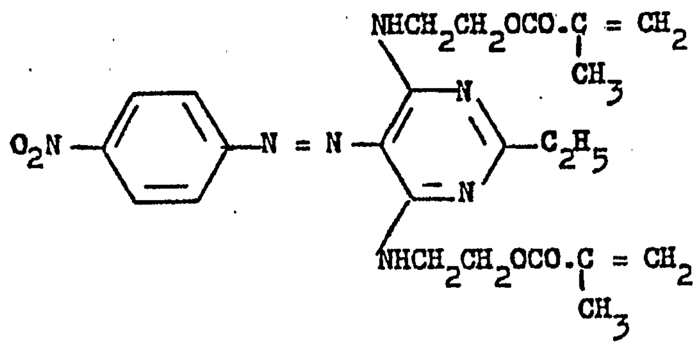 | Methyl methacrylate | Golden yellow |
| 3 | " | Ethyl methacrylate | " |
| 4 | 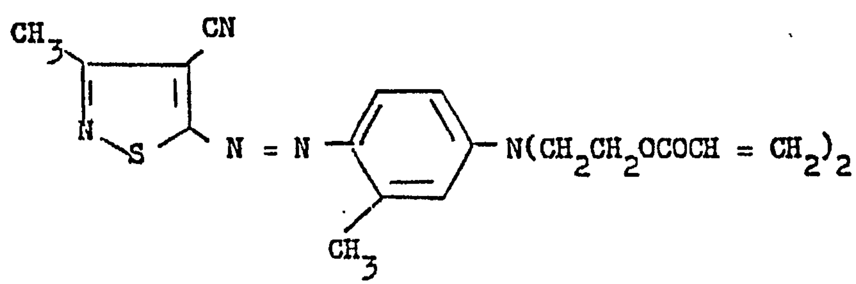 | Methyl methacrylate | Bluish-red |

| Example | Dyestuff Monomer | Colourless Co-Monomer | Shade on Cotton |
|---|---|---|---|
| 5 | 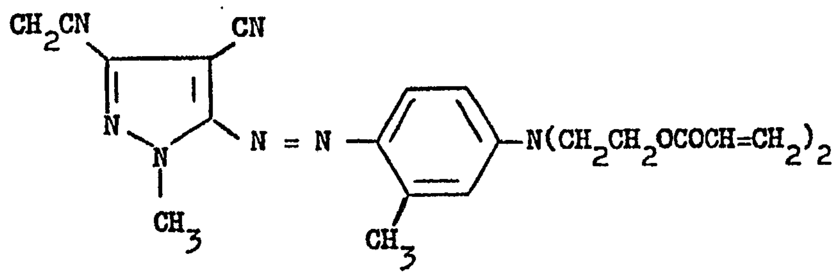 | Methyl methacrylate | Orange |
| 6 | 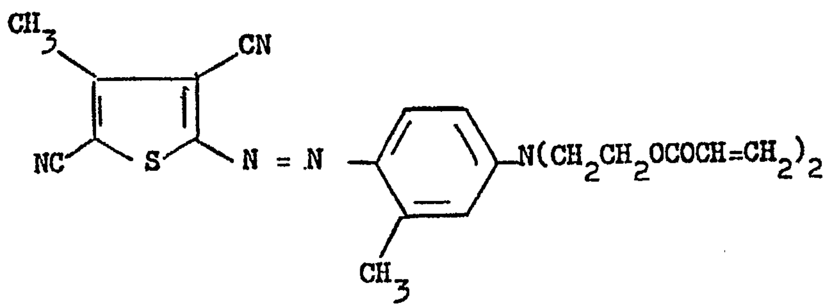 | " | Violet |

| Example | Dyestuff Monomer | Colourless Co-Monomer | Shade on Cotton |
|---|---|---|---|
| 7 | 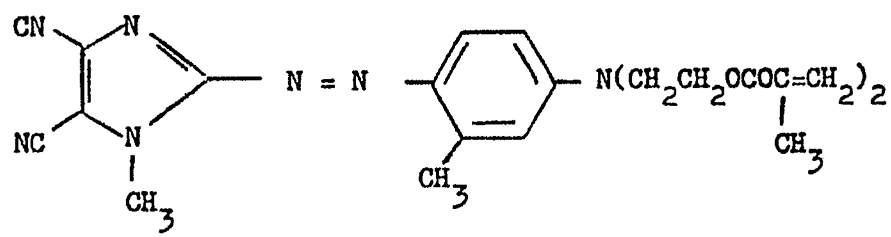 | Methyl methacrylate | Bluish-red |

| Example | Dyestuff Monomer | Colourless Co-Monomer | Shade on Cotton |
|---|---|---|---|
| 8 | 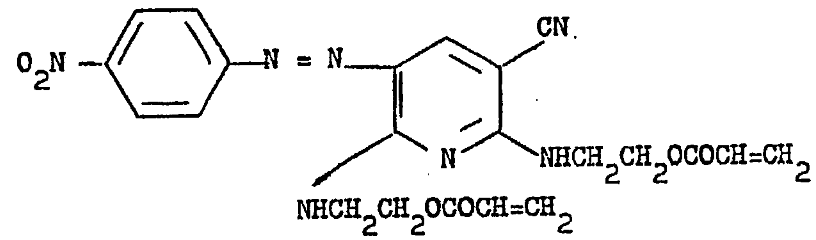 | Methyl methacrylate | Orange |
| | | | |

Table 2 describes further Examples of coloured copolymers prepared by the method of Example 1. In the table, the second and third columns respectively describe the diazo and coupling components used to make the azo dye. The third column gives the colourless co-monomer and the final column indicates the colour of the printed cotton.

Table 2

| Example | Diazo Component | Coupling Component | Colourless co-monomer | Shade on cotton |
|---|---|---|---|---|
| 9 | 4-nitroaniline | 4,6-bis-[(2-acryloyloxy-1-ethyl)ethylamino]2-ethylpyrimidine | methyl methacrylate (mm) | Golden yellow |
| 10 | 4-nitroaniline | 4,6-bis-[(2-acryloyloxy-1-ethyl)ethylamino]2-ethylpyrimidine | mm/acrylic acid | Golden yellow |
| 11 | 4-nitroaniline | 4,6-bis-[(2-acryloyloxy-1-ethyl)ethylamino]2-ethylpyrimidine | mm/butyl acrylate | Golden yellow |
| 12 | 4-nitroaniline | 4,6-bis-[(2-acryloyloxy-1-ethyl)ethylamino]2-ethylpyrimidine | 2-ethyl hexyl methacrylate | Golden yellow |
| 13 | 4-nitroaniline | 4,6-bis-[(2-acryloyloxy-1-ethyl)ethylamino]2-ethylpyrimidine | dodecyl methacrylate | Golden yellow |
| 14 | 4-cyanoaniline | 4-acryloyloxyethylamino-6-ethylamino-2-ethylpyrimidine | mm | Mid-yellow |
| 15 | 4-cyanoaniline | 4-acryloyloxyethylamino-6-ethylamino-2-ethylpyrimidine | mm/1,2-bis-acryloyl oxythane | Mid-yellow |
| 16 | 4-(1,1-bisacryloyloxymethylpropoxycarbonyl) aniline | 1-ethyl-5-cyano-4-methyl-6-hydroxypyrid-2-one | mm | Greenish yellow |
| 17 | 5-amino-4-cyano-1,3-dimethyl pyrazole | N-acryloyloxy-ethyl-N-cyanoethyl-3-acrylamidoaniline | mm | Golden yellow |

The following Table 3 represents polymerised dye emulsions obtained in a similar fashion by using the coupling component of Example 4 and the diazo component described in the second column. The colourless co-monomer is again described in column three and the shade imparted to cotton is shown in the final column.

Table 3

| Example | Diazo Component | Colourless co-monomer | Shade on cotton |
|---|---|---|---|
| 18 | 3-amino-5-cyano-6-methylisothiazolo[3,4:b]pyridine | mm | Blue |
| 19 | 2-amino-6-thiocyanatobenzthiazole | mm | Red |
| 20 | 2-amino-5-chloro-1,3-thiadiazole | mm | Scarlet |
| 21 | 2-amino-3-cyano-5-phenylazo-thiophene | mm | Blue |
| 22 | 5-amino-3-cyanomethyl-4-ethoxycarbonyl-1-methylpyrazole | mm | Orange |
| 23 | 5-amino-3-phenyl-1,2,4-thiadiazole | mm | Red |
| 24 | 5-amino-3-methylthio-1,2,4-thiadiazole | mm | Red |
| 25 | 5-amino-4-nitro-3-methyl-isothiazole | mm | Reddish blue |
| 26 | 5-amino-3-bromo-4-acetyl-isothiazole | mm | Red |
| 27 | 6-amino-2-methylthioisothazolo[4,5:d]thiazole | mm | Red |
| 28 | 3-amino-4-methyl-5-methylthioisothiazole | mm | Golden yellow |
| 29 | 4-amino-3,5-bis-ethoxycarbonylisothiazole | mm | Scarlet |
| 30 | 2-amino-4-chloro-5-formylthiazole | mm | Violet |
| 31 | 5-amino-4-cyano-3-methylsulphonylisothiazole | mm | Bluish red |
| 32 | 5-amino-4-cyano-3-ethylsulphonylisothiazole | mm | Bluish red |
| 33 | 3-amino-2,4,6-trichloropyridine | mm | Orange |
| 34 | 2-amino-4,5-dicyanothiazole | mm | Reddish blue |
| 35 | 2-amino-6-cyanobenzthiazole | mm | Bluish red |
| 36 | 3-amino-5,7-dicyano-2,1-benzisothiazole | mm | Blue |

Similar dyes are prepared by using the coupling component of Example 1 with the diazo components indicated in Table 4. The shades obtained on cotton are indicated in the final column of the table. All of the co-polymerised dyes are made using the quantities described in Example 1.

Table 4

| Example | Diazo Component | Colourless co-monomer | Shade on cotten |
|---|---|---|---|
| 37 | 2-chloro-4-nitroaniline | mm | Orange |
| 38 | 2-cyano-4-nitroaniline | mm | Reddish orange |
| 39 | 2-bromo-6-cyano-4-nitroaniline | mm | Yellow red |
| 40 | 2,6-dicyano-4-nitroaniline | mm | Scarlet |
| 41 | 4-ethylsulphamoylaniline | mm | Yellow |
| 42 | 3,4-dicyanoaniline | mm | Golden yellow |
| 43 | 4-nitroaniline | mm/N-methylol acrylamide | Golden yellow |
| 44 | 2-chloro-5-nitroaniline | mm | Yellow |
| 45 | 4-methoxycarbonylaniline | mm | Mid-yellow |
| 46 | 2,6-dichloro-4-ethylsulphamoylaniline | mm | Yellow |
| 47 | 2-bromo-6-cyano-4-methyoxycarbonylaniline | mm | Orange |
| 48 | 5-amino-4-cyano-3-methylisothiazole | mm | Scarlet |
| 49 | 4-methylsulphonylaniline | mm | Yellow |
| 50 | 2-amino-3-cyano-5-phenylazothiophene | mm | Scarlet |
| 51 | 2,6-dicyano-4-methylaniline | mm | Orange |
| 52 | 2,6-dicyano-4-methoxycarbonylaniline | mm | Scarlet |
| 53 | 2-cyano-5-nitroaniline | mm | Scarlet |
| 54 | 2-methoxycarbonyl-4-nitroaniline | mm | Scarlet |

Example 55

A preparation is conducted in exactly the same way as in Example 1 except that 3.0 parts of the same dyestuff monomer is used in place of the 1.0 part of Example 1 to give a final print on cotton with good handle properties.

Example 56

A further preparation is conducted as described in Example 55 except that 1 part of N-methylol acrylamide is additionally dissolved in the solution containing the surfactants (lauryl ether sulphonate and ethoxylated $C_{13}$–$C_{15}$ aliphatic alcohol). The final emulsion is applied to cotton in the presence of synthetic thickener alone and fixed by baking at 150°. The resultant print has good handle properties and fastness to scrubbing and rubbing.

Further examples are illustrated in the following Table 5. The diazo component is shown in the second column, the coupling component in the third column, the co-monomer in the fourth column and the shade imparted to cotton in the fifth column. The method of preparation is as described for Example 1.

Table 5

| Example | Diazo Component | Coupling Component | Colourless co-monomer | Shade on cotton |
|---|---|---|---|---|
| 57 | 2-chloro-4-nitroaniline | 1-[2,3-bis(acryloyloxy)prop-1-yl]-3-cyano-2-hydroxy-4-methylpyrid-6-one | mm | Greenish yellow |
| 58 | 2-chloro-4-nitroaniline | 4,6-bis-(2-acryloyloxyethylamino)-2-chloropyrimidine | mm | Golden yellow |
| 59 | 2-chloro-4-nitroaniline | 2,4,6-tris(2-acryloyloxyethylamino)-2-chloropyrimidine | mm | Orange |
| 60 | 2-chloro-4-nitroaniline | 4,6-bis(2-acryloyloxyethylamino)-2-thiomethyl pyrimidine | mm | Orange |
| 61 | 2-chloro-4-nitroaniline | 4,6-bis(2-acryloyloxyethylamino)-2-N,N-bis-ethylamino pyrimidine | mm | Scarlet |
| 62 | 2-chloro-4-nitroaniline | 5-(2,3-bis-acryloyloxy)prop-1-ylamino-1,3-dimethylpyrazole | mm | Golden yellow |
| 63 | 2-chloro-4-nitroaniline | 2,6-bis-(2-acryloyloxyethylamino)-3-cyano-4-methylpyridine | mm | Orange |
| 64 | 4-nitroaniline | 2,4-bis-(2-acryloyloxyethylamino)-4-chloro-pyrimidine | mm | Golden yellow |
| 65 | 4-nitroaniline | 2,4,6-tris-(2-acryloyloxyethylamino)-pyrimidine | mm | Golden yellow |
| 66 | 4-nitroaniline | 2,6-bis(2-acryloyloxyethylamino)-3-cyano-4-methylpyridine | mm | Orange |
| 67 | 4-nitroaniline | 1-[2,3-bis(acryloyloxy)prop-1-yl]-3-cyano-2-hydroxy-4-methylpyrid-6-one | mm | Greenish yellow |
| 68 | 4-aminostyrene | 1-(3-acryloyloxy-n-propyl)-3-cyano-2-hydroxy-4-methylpyrid-6-one | mm/bis-acryloylethylene glycol | Greenish yellow |
| 69 | 4-acryloyloxyethylaminosulphonylaniline | 1-(3-acryloyloxy-n-propyl)-3-cyano-2-hydroxy-4-methylpyrid-6-one | mm/bis-acryloylethylene glycol | Greenish yellow |
| 70 | 2-chloro-4-nitroaniline | 4,6-bis-(2-methacryloyloxyethylamino)-2-ethylpyrimidine | 2-ethyl hexyl methacrylate/mm. 2/1 | Orange |
| 71 | 2-chloro-4-nitroaniline | 4,6-bis-(2-methacryloyloxyethylamino)-2-ethylpyrmidine | Styrene/mm. 1/3 | Orange |
| 72 | 2-chloro-4-nitroaniline | 4,6-bis-(2-methacryloyloxyethylamino)-2-ethylpyrimidine | alpha-methyl styrene | Orange |
| 73 | 2-chloro-4-nitroaniline | 4,6-bis-(2-methacryloyloxyethylamino)-2-ethylpyrimidine | methacrylo-nitrile | Orange |
| 74 | 2-chloro-4-nitroaniline | 4,6-bis-(2-methacryloyloxyethylamino)-2-ethylpyrimidine | mm/glycidyl methacrylate 4/1 | Orange |
| 75 | 2-chloro-4-nitroaniline | 4,6-bis-(2-methacryloyloxyethylamino)-2-ethylpyrimidine | vinil acetate/mm. 1/2 | Orange |
| 76 | 2-chloro-4-nitroaniline | 4,6-bis-(2-methacryloyloxyethylamino)-2-ethylpyrimidine | dodecyl methacrylate | Orange |
| 77 | 4-nitroaniline | 4,6-bis-(2-acryloyloxyethylamino)-2-ethylpyrimidine | mm | Orange |
| 78 | 4-nitroaniline | 4,6-bis-(2-methacryloyloxyethylamino)-2-ethylpyrimidine | mm | Orange |
| 79 | 4-nitroaniline | 4,6-bis-[2-(1-bromoacryloyloxy)ethylamino]-2-ethylpyrimidine | mm | Golden yellow |
| 80 | 4-nitroaniline | 4,6-bis-[2-(1-methoxyacryloyloxy)ethylamino]-2-ethylpyrimidine | mm | Golden yellow |

Example 81

10 parts of the product from Example 1 are added to 50 parts of an emulsion paint base containing titanium dioxide pigment giving a strong golden-yellow shade. A dried film of this material has good fastness to light. The coloured emulsion paint obtained is stable and the coloured polymer deposits much less quickly than does a pigment control.

Example 82

1.0 part of the dyestuff monomer of Example 77 is stirred with 30 parts of methyl ethyl ketone and 6.0 parts of methyl methacrylate under nitrogen for 10 minutes until a solution is obtained. Azo-bis-isobutyronitrile (0.4 parts) is added and the mixture stirred and heated under reflux whilst passing nitrogen gas for 2 hours. The product solution is added to methanol and the oil which precipitates slowly becomes a gum from which the supernatant liquor is decanted. The gum triturated with methanol and the solid which forms is filtered off and washed well with methanol then dried at 60° to give an orange powder soluble in ethyl acetate. This powder colours polymers such as methyl methacrylate in transparent golden yellow shades of excellent fastness to light and bleeding or blooming.

Example 83

The emulsion product of Example 1 is diluted with 200 parts of water and is used in aqueous based inks to produce prints of excellent fastness to water, light and rubbing.

Example 84

2 parts of the product from Example 82 is gravel milled with 8 parts of water and 1 part of dispersing agent for 48 hours to give a dispersion which is applied from a printing paste containing a polyacrylic acid synthetic thickener to cotton, then fixed by baking at 150° for 2 minutes. The resultant golden yellow print has good fastness to washing.

Example 85

A preparation is conducted as described in Example 82 except that the dyestuff monomer of Example 77 is replaced by the dyestuff monomer of Example 1. The product gives prints with excellent fastness to washing, solvents and rubbing after application with a polyacrylate binder.

**Claims**

1. A coloured polymer obtained by the copolymerisation of at least one uncoloured polymerisable olefin and at least one azo dye which is free from water-solubilising groups and contains at least one polymerisable olefinically unsaturated group and has the formula:

A–N=N–E

wherein A represents the residue of a carbocyclic or heterocyclic diazotisable amine containing at least one electron-withdrawing substituent and E represents the residue of a carbocyclic coupling component or a heterocyclic coupling component of the aminopyrazole, 2,6-diaminopyridine, 2,6-dihydroxypyridine or aminopyrimidine series, at least one of A and E being heterocyclic, the or each polymerisable group being attached to a carbon atom forming part of residue A or E.

2. A coloured polymer according to claim 1 wherein the or each polymerisable olefinically unsaturated group has the formula:

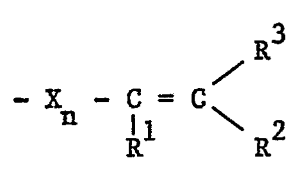

wherein X represents an atom or group linking the olefinic group to a carbon atom present in residue A or residue E, n has the value of 0 or 1 and each of $R^1$, $R^2$ and $R^3$ independently represents a hydrogen or halogen atom or a hydroxyl, optionally substituted alkyl, optionally substituted alkoxy, optionally substituted alkylthio, cycloalkyl, optionally substituted aryl, optionally substituted aryloxy, optionally substituted arylthio, nitro, cyano, acyloxy or alkoxycarbonyl group.

3. A coloured polymer according to claim 2 wherein each of $R^2$ and $R^3$ is hydrogen and $R^1$ is hydrogen, halogen, lower alkyl, cyano or alkoxycarbonyl.

4. A coloured polymer according to claim 3 wherein $R^1$ is methyl.

5. A coloured polymer according to claim 2 wherein the or each polymerisable group has the formula:

$-O-CO-CR^5=CH_2$

wherein $R^5$ is hydrogen or lower alkyl.

6. A coloured polymer according to claim 5 wherein $R^5$ is methyl.

7. A coloured polymer according to claim 1 wherein the azo dye contains two polymerisable olefinically unsaturated groups.

8. A coloured polymer according to claim 2 wherein the azo dye has the formula:

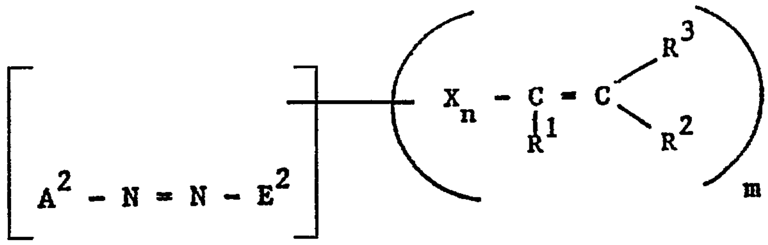

wherein $A^2$ represents the residue of a carbocyclic diazotisable amine containing at least one electron-withdrawing substituent and optionally one or more non-ionic substituent not electron-withdrawing in character;

$E^2$ represents the residue of a heterocyclic coupling component of the aminopyrazole, 2,6-diaminopyridine, 2,6-dihydroxypyridine or aminopyrimidine series:

m is an integer of at least 1; and

$R^1$, $R^2$, $R^3$, X, and n have the meanings given in claim 2, the dye being free from water-solubilising groups.

9. A coloured polymer according to claim 2 wherein the azo dye has the formula:

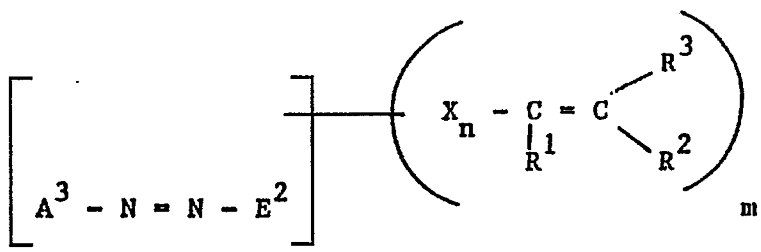

wherein $A^3$ represents the residue of a heterocyclic diazotisable amine containing at least one electron-withdrawing substituent and optionally one or more non-ionic substituent not electron-withdrawing in character;

$E^2$ represents the residue of a heterocyclic coupling component of the aminopyrazole, 2,6-diaminopyridine, 2,6-dihydroxypyridine or aminopyrimidine series;

m is an integer of at least 1, and

$R^1$, $R^2$, $R^3$, X, and n have the meanings given in claim 2, the dye being free from water-solubilising groups.

10. A coloured polymer according to claim 2 wherein the azo dye has the formula:

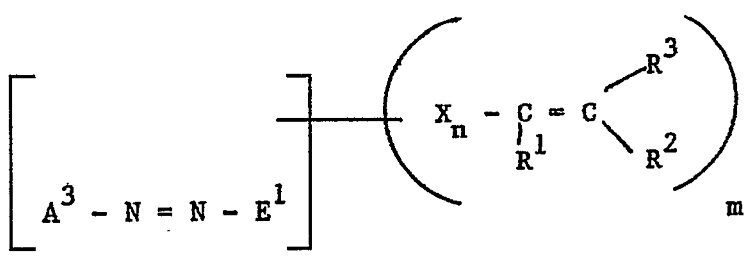

wherein $A^3$ represents the residue of a heterocyclic diazotisable amine containing at least one electron-withdrawing substituent and optionally one or more non-ionic substituent not electron-withdrawing in character;

$E^1$ represents the residue of a carbocyclic coupling component;

m is an integer of at least 1, and
$R^1$, $R^2$, $R^3$, X, and n have the meanings given in claim 2, the dye being free from water-solubilising groups.

11. A coloured polymer according to claim 1 containing from 2 to 10% by weight of units derived from an azo dye.

12. A coloured polymer according to claim 1 wherein the uncoloured polymerisable olefin is methyl methacrylate.

13. An aqueous dispersion or latex containing from 20 to 50% by weight of the coloured polymer defined in claim 1.

14. An aqueous dispersion or latex according to claim 13 wherein the coloured polymer contains
(a) from 2 to 10% by weight of units derived from at least one azo dye as defined in claim 1 having at least two methacryloyl groups, and
(b) from 98 to 90% by weight of units derived from a mixture of co-monomers containing from 99.9 to 95% by weight of methyl methacrylate and from 0.1 to 5% by weight of an N-methylolacrylamide derivative.

15. A process for colouring a substrate which comprises applying to the substrate a coloured polymer as defined in claim 1.

16. A process according to claim 15 wherein the substrate is a cellulosic textile material.

## Patentansprüche

1. Gefärbtes Polymer, das erhalten wird durch Copolymerisation mindestens eines ungefärbten polymerisierbaren Olefins und mindestens eines Azofarbstoffs, der frei von wasserlöslichmachenden Gruppen ist und mindestens eine polymerisierbare olefinische ungesättigte Gruppe enthält und die Formel aufweist:

A–N=N–E

worin A für den Rest eines carbocyclischen oder heterocyclischen diazotierbaren Amins steht, das mindestens einen Elektronen abziehenden Substituenten enthält, und E für den Rest einer carbocyclischen Kupplungskomponente oder einer heterocyclischen Kupplungskomponente der Aminopyrazol-, 2,6-Diaminopyridin-, 2,6-Dihydroxypyridin- oder Aminopyrimidin-Reihe steht, wobei mindestens einer der Reste A und E heterocyclisch ist und wobei die oder jede polymerisierbare Gruppe an ein Kohlenstoffatom gebunden ist, welches einen Teil des Restes A oder E bildet.

2. Gefärbtes Polymer nach Anspruch 1, in welchem die oder jede polymerisierbare olefinisch ungesättigte Gruppe die Formel aufweist:

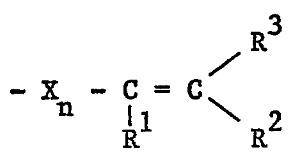

worin X für ein Atom oder eine Gruppe steht, welche die olefinische Gruppe mit einem im Rest A oder im Rest E vorhandenen Kohlenstoffatom verbindet, n den Wert 0 oder 1 aufweist und jeder der Reste $R^1$, $R^2$ und $R^3$ unabhängig für ein Wasserstoff- oder Halogenatom oder eine Hydroxyl-, ggf. substituierte Alkyl-, ggf. substituierte Alkoxy-, ggf. substituierte Alkylthio-, Cycloalkyl-, ggf. substituierte Aryl-, ggf. substituierte Aryloxy-, ggf. substituierte Arylthio-, Nitro-, Cyano-, Acyloxy- oder Alkoxycarbonylgruppe steht.

3. Gefärbtes Polymer nach Anspruch 2, bei welchem jeder der Reste $R^2$ und $R^3$ für Wasserstoff steht und $R^1$ für Wasserstoff, Halogen, Niederalkyl, Cyano oder Alkoxycarbonyl steht.

4. Gefärbtes Polymer nach Anspruch 3, bei welchem $R^1$ für Methyl steht.

5. Gefärbtes Polymer nach Anspruch 2, bei welchem die oder jede polymerisierbare Gruppe die Formel aufweist:

$-O-CO-CR^5=CH_2$

worin $R^5$ für Wasserstoff oder Niederalkyl steht.

6. Gefärbtes Polymer nach Anspruch 5, bei welchem $R^5$ für Methyl steht.

7. Gefärbtes Polymer nach Anspruch 1, bei welchem der Azofarbstoff zwei polymerisierbare olefinisch ungesättigte Gruppen enthält.

8. Gefärbtes Polymer nach Anspruch 2, bei welchem der Azofarbstoff die Formel aufweist:

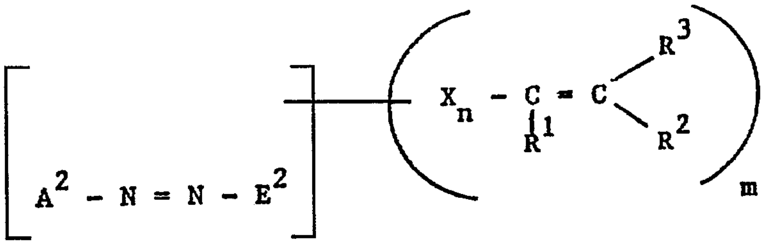

worin $A^2$ für den Rest eines carbocyclischen diazotierbaren Amins steht, das mindestens einen Elektronen abziehenden Substituenten enthält und ggf. einen oder mehrere nichtionische Substituenten ohne Elektronen abziehenden Charakter enthält,
$E^2$ für den Rest einer heterocyclischen Kupplungskomponente der Aminopyrazol-, 2,6-Diaminopyridin-, 2,6-Dihydroxypyridin- oder Aminopyrimidin-Reihe steht,
m für eine Ganzzahl von mindestens 1 steht und
$R^1$, $R^2$, $R^3$, X und n die in Anspruch 2 angegebenen Bedeutungen haben,
wobei der Farbstoff frei von wasserlöslichmachenden Gruppen ist.

9. Gefärbtes Polymer nach Anspruch 2, in welchem der Azofarbstoff die Formel aufweist:

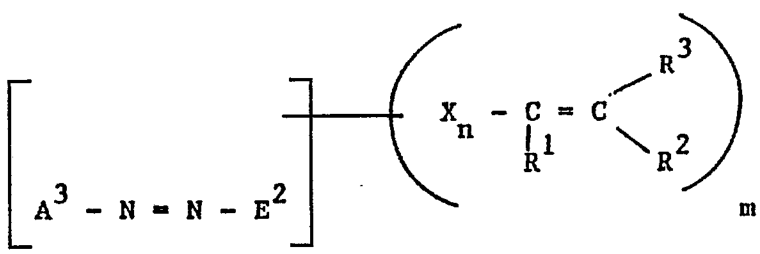

worin $A^3$ für den Rest eines heterocyclischen diazotierbaren Amins steht, das mindestens einen Elektronen abziehenden Substituenten und ggf. ein oder mehrere nichtionische Substituenten ohne Elektronen abziehenden Charakter enthält,
$E^2$ für den Rest einer heterocyclischen Kupplungskomponente der Aminopyrazol-, 2,6-Diaminopyridin-, 2,6-Dihydroxypyridin- oder Aminopyrimidin-Reihe steht,
m für eine Ganzzahl von mindestens 1 steht und
$R^1$, $R^2$, $R^3$, X und n die in Anspruch 2 angegebenen Bedeutungen haben,
wobei der Farbstoff frei von wasserlöslichmachenden Gruppen ist.

10. Gefärbtes Polymer nach Anspruch 2, in welchem der Azofarbstoff die Formel aufweist:

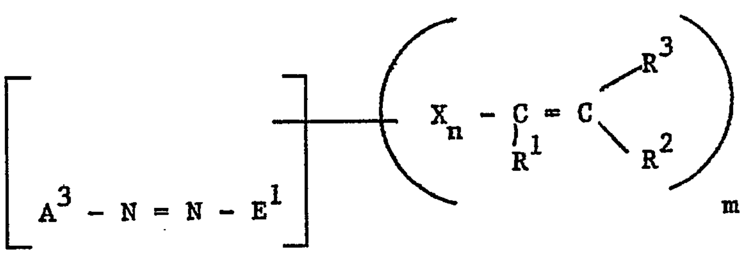

worin $A^3$ für den Rest eines heterocyclischen diazotierbaren Amins steht, das mindestens einen Elektronen abziehenden Substituenten und ggf. einen oder mehrere nichtionische Substituenten ohne Elektronen abziehenden Charakter enthält,
$E^1$ für den Rest einer carbocyclischen Kupplungskomponente steht,
m für eine Ganzzahl von mindestens 1 steht und
$R^1$, $R^2$, $R^3$, X und n die in Anspruch 2 angegebenen Bedeutungen haben,
wobei der Farbstoff frei von wasserlöslichmachenden Gruppen ist.

11. Gefärbtes Polymer nach Anspruch 1, welches 2 bis 10 Gew.-% Einheiten enthält, die sich von einem Azofarbstoff ableiten.

12. Gefärbtes Polymer nach Anspruch 1, bei welchem das ungefärbte polymerisierbare Olefin aus Methylmethacrylat besteht.

13. Wäßrige Dispersion oder wäßriger Latex, welche 20 bis 50 Gew.-% von dem in Anspruch 1 definierten gefärbten Polymer enthalten.

14. Wäßrige Dispersion oder wäßriger Latex nach Anspruch 13, in welchen das gefärbte Polymer folgendes enthält:
(a) 2 bis 10 Gew.-% Einheiten, die sich von mindestens einem in Anspruch 1 definierten Azofarbstoff ableitet, der mindestens zwei Methacryloylgruppen enthält, und
(b) 98 bis 90 Gew.-% Einheiten, die sich von einem Gemisch von Comonomeren ableiten, das 99,9 bis 95 Gew.-% Methylmethacrylat und 0,1 bis 5 Gew.-% eines N-Methylolacrylamid-Derivats enthält.

15. Verfahren zum Färben eines Substrats, bei welchem auf das Substrat ein gefärbtes Polymer nach Anspruch 1 aufgebracht wird.

16. Verfahren nach Anspruch 15, bei welchem das Substrat ein Cellulosetextilmaterial ist.

## Revendications

1. Polymère coloré obtenu par copolymérisation d'au moins une oléfine polymérisable non colorée et d'au moins un colorant azoïque qui est exempt de radicaux qui solubilisent dans l'eau et contient au moins un radical oléfiniquement insaturé polymérisable et est de formule

A–N=N–E

où A représente le reste d'une amine carbocyclique ou hétérocyclique diazotable contenant au moins un substituant électro-attracteur et E représente le reste d'un composant copulant carbocyclique ou d'un composant copulant hétérocyclique de la série de l'aminopyrazole, de la 2,6-diaminopyridine, de la 2,6-dihydroxypyridine ou de l'aminopyrimidine, au moins l'un d'entre A et E étant hétérocyclique, le ou chaque radical polymérisable étant uni à un atome de carbone faisant partie du reste A ou E.

2. Polymère coloré suivant la revendication 1, dans lequel le ou chaque radical oléfiniquement insaturé polymérisable est de formule

$$-X_n-\underset{R^1}{\underset{|}{C}}=\underset{R^2}{\underset{|}{C}}-R^3$$

où X représente un atome ou radical unissant le radical oléfinique à un atome de carbone présent dans le reste A ou le reste E, n a la valeur de 0 ou 1 et chacun d'entre $R^1$, $R^2$ et $R^3$ représente indépendamment un atome d'hydrogène ou d'halogène ou un radical hydroxyle, alcoyle facultativement substitué, alcoxy facultativement substitué; alcoylthio facultativement substitué, cycloalcoyle, aryle facultativement substitué, aryloxy facultativement substitué; arylthio facultativement substitué, nitro, cyano, acyloxy ou alcoxycarbonyle.

3. Polymère coloré suivant la revendication 2, dans lequel chacun d'entre $R^2$ et $R^3$ est hydrogène et $R^1$ est hydrogène, halogène, alcoyle inférieur, cyano ou alcoxycarbonyle.

4. Polymère coloré suivant la revendication 3, dans lequel $R^1$ est méthyle.

5. Polymère coloré suivant la revendication 2, dans lequel le ou chaque radical polymérisable est de formule

$-O-CO-CR^5=CH_2$

où $R^5$ est hydrogène ou alcoyle inférieur.

6. Polymère coloré suivant la revendication 5, dans lequel $R^5$ est méthyle.

7. Polymère coloré suivant la revendication 1, dans lequel le colorant azoïque contient deux radicaux oléfiniquement insaturés polymérisables.

8. Polymère coloré suivant la revendication 2, dans lequel le colorant azoïque est de formule

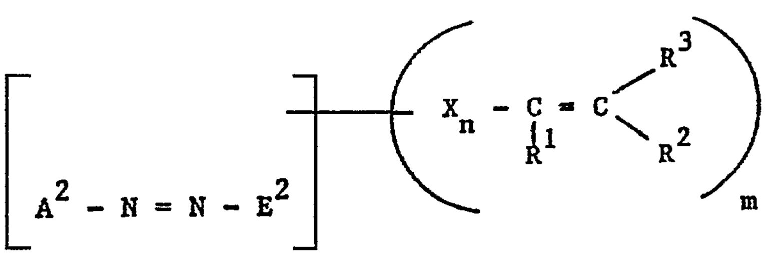

où $A^2$ représente le reste d'une amine carbocyclique diazotable contenant au moins un substituant électro-attracteur et facultativement un ou plusieurs substituants non ioniques de caractère non électro-attracteur;

$E^2$ représente le reste d'un composant copulant hétérocyclique de la série de l'aminopyrazole, de la 2,6-diaminopyridine, de la 2,6-dihydroxypyridine ou de l'aminopyrimidine;
m est un entier d'au moins 1; et
$R^1$, $R^2$, $R^3$, X, et n ont les significations attribuées dans la revendication 2, le colorant étant exempt de radicaux qui solubilisent dans l'eau.

9. Polymère suivant la revendication 2, dans lequel le colorant azoïque est de formule

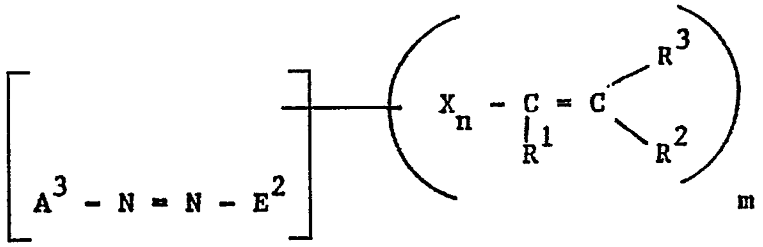

où $A^3$ représente le reste d'une amine hétérocyclique diazotable contenant au moins un substituant électro-attracteur et facultativement un ou plusieurs substituants non ioniques de caractère non électro-attracteur;
$E^2$ représente le reste d'un composant copulant hétérocyclique de la série de l'aminopyrazole, de la 2,6-diaminopyridine, de la 2,6-dihydroxypyridine ou de l'aminopyrimidine;
m est un entier d'au moins 1; et
$R^1$, $R^2$, $R^3$, X, et n ont les significations attribuées dans la revendication 2,
le colorant étant exempt de radicaux qui solubilisent dans l'eau.

10. Polymère coloré suivant la revendication 2, dans lequel le colorant azoïque est de formule

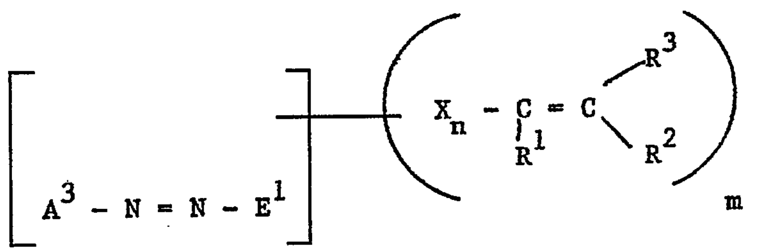

où $A^3$ représente le reste d'une amine hétérocyclique diazotable contenant au moins un substituant électro-attracteur et facultativement un ou plusieurs substituants non ioniques de caractère non électro-attracteur,
$E^1$ représente le reste d'un composant copulant carbocyclique;
m est un entier d'au moins 1, et
$R^1$, $R^2$, $R^3$, X, et n ont les significations attribuées dans la revendication 2,
le colorant étant exempt de radicaux qui solubilisent dans l'eau.

11. Polymère coloré suivant la revendication 1, contenant 2 à 10% en poids d'unités dérivées d'un colorant azoïque.

12. Polymère coloré suivant la revendication 1, dans lequel l'oléfine non colorée polymérisable est le méthacrylate de méthyle.

13. Dispersion aqueuse ou latex contenant 20 à 50% en poids du polymère coloré défini dans la revendication 1.

14. Dispersion aqueuse ou latex suivant la revendication 13, dans lequel le polymère coloré contient
(a) 2 à 10% en poids d'unités dérivées d'au moins un colorant azoïque tel que défini dans la revendication 1 qui comprend au moins deux radicaux méthacryloyle,
(b) 98 à 90% en poids d'unités dérivées d'un mélange de comonomères contenant 99,9 à 95% en poids de méthacrylate de méthyle et 0,1 à 5% en poids d'un dérivé de N-méthylolacrylamide.

15. Procédé pour colorer un substrat, qui comprend l'application sur le substrat d'un polymère coloré tel que défini dans la revendication 1.

16. Procédé suivant la revendication 15, dans lequel le substrat est une matière textile cellulosique.